# EUROPEAN PATENT SPECIFICATION

(11) **EP 1 770 965 B1**
(45) Date of publication and mention of the grant of the patent: **10.09.2008**
(21) Application number: 06020155.5
(22) Date of filing: 26.09.2006
(51) Int. Cl.: H04M 1/23, H04M 1/02, G06F 1/16

(54) **Mobile terminal with a plurality of slidable keypads**
Mobiles Endgerät mit einer Mehrzahl von ausziehbaren Tastaturen
Terminal mobile avec une pluralité de claviers coulissants

(30) Priority: 29.09.2005 KR 20050091637
(43) Date of publication of application: 04.04.2007
(73) Proprietor: LG Electronics Inc., Yongdungpo-gu Seoul (KR)
(72) Inventor: Lee, Kyung-Hwan, Jangan-Gu Suwon Gyeonggi-Do (KR); Kim, Young-Hwan, Yongdungpo-Gu Seoul (KR)
(74) Representative: Urner, Peter

(56) References cited:
- WO-A2-20/05082108
- GB-A- 2 387 988
- US-A1- 2003 003 878
- US-A1- 2003 147 205
- US-A1- 2003 157 957
- US-A1- 2005 059 438
- US-A1- 2005 070 348

## Description

This application claims priority to Korean Patent Application No. 10-2005-0091637 filed on September 29, 2005 in Korea.

### BACKGROUND OF THE INVENTION

### 1. Field of the Invention

The present invention relates to a mobile terminal.

### 2. Description of the Related Art

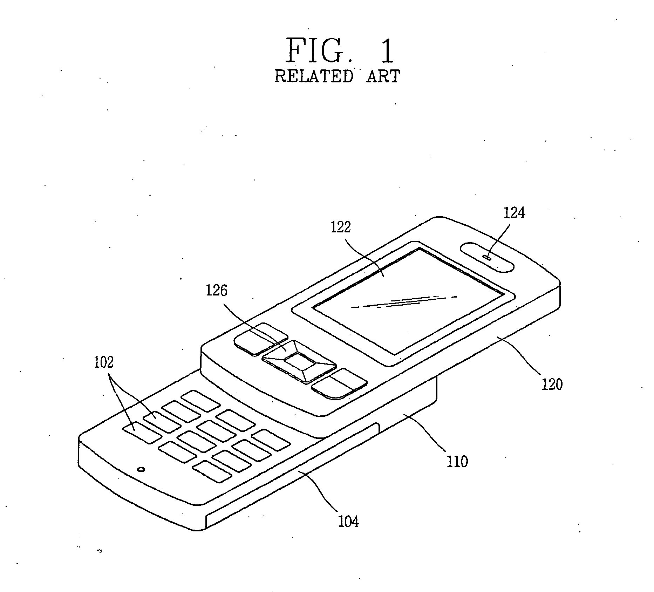

FIG. 1 is an overview of a slide type mobile terminal in accordance with the related art. As shown, the related art slide type terminal includes a terminal body 110 having a battery 104 on one side and a keypad 102 on the other side, and a sliding body 120 that slides open and closed over the keypad 102. Further, the sliding body 120 includes a display 122, function keys 126 and a speaker 124. A printed circuit board (PCB) (not shown) is also disposed between the keypad 102 and the battery 104.

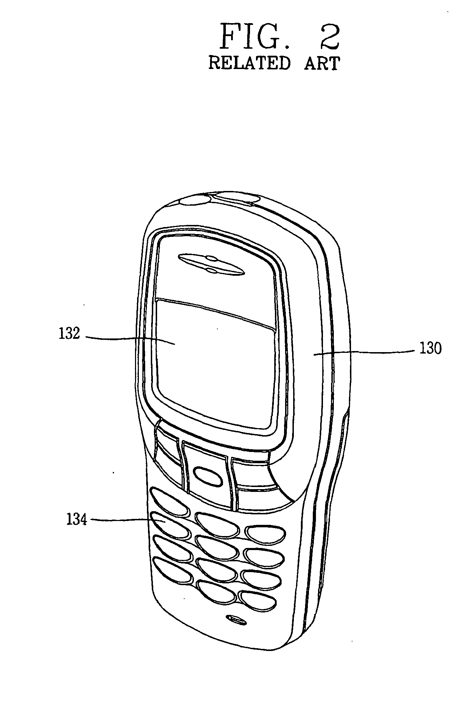

However, because the keypad 102 is mounted on the terminal body 110, the battery 104 is mounted at a rear surface of the terminal body 110, and the PCB is installed between the keypad 102 and the battery 104, the related art sliding-type mobile terminal is relatively thick. The same is true for the bar type terminal shown in FIG. 2.

That is, because the bar type terminal includes a display 132 and a keypad 134 mounted on a front surface of a main body 130, the terminal is relatively thick and also the display 132 is small so as to accommodate the keypad 134.

GB 2 387 988 describes a mobile phone having a first and second body, which are slidable to each other, wherein the second or lower body includes a notch for receiving a first and second keypad, which are accessible when the first or upper body is slided away. For accessing the lower keypad, the upper keypad needs to be pushed below the first body inside the notch of the second body.

US 2003/0147205 A1 describes a extendable keypad for a notebook. A first keypad block including the cursor keys is extracted from the main part. Within these first block, there is a further block including numeric keys, which could be extracted from the first block.

US 2005/0059438 A1 describes a slidable mobile having multiple keypads. A first alpha-numerical keypad could be extracted by moving the lower and the intermediate part to the left side from the first body. The numerical key part could be extracted when moving only the lower part.

US 2003/0003878 describes a mobile having a foldable display and a hide-away-keyboard. The mobile includes a receiving part. The keypad is extracted by moving the keypad to the left and then unfold the keypad like a book, wherein left and right sides of the keypad are placed adjacent to mobile and connected via a hinge.

US 2005/0070348 describes a mobile having two slidable keypads. The mobile includes three layers. The first layer includes a display and some functional keys. The intermediate layer includes a numerical keypad and the lower layer includes the alpha-numerical keypad.

US 2003/0157957 describes a mobile having a convertible keypad, which could be moved to a side. A further keypad could be unfolded after moving the first keypad.

WO 2005/082108 describes a keyboard including a plurality of planes, which could be extended after drawing a plane out of a stacked state. In the stacked state the mobile has only some functional keys, In a first extended stage only some numbers and letters are exposed, wherein when further extracting the keypad part further numbers and letters will be exposed to be used for inputting something.

### SUMMARY OF THE INVENTION

Accordingly, one object of the present invention is to address the above-noted and other objects.

Another object of the present invention is to provide a mobile terminal that includes a stackable keypad inserted within the main body of the terminal and that can be drawn out when needed.
The objects are solved by the features of claim 1.

Further scope of applicability of the present invention will become apparent from the detailed description given hereinafter. However, it should be understood that the detailed description and specific examples, while indicating preferred embodiments of the invention, are given by illustration only, since various changes and modifications within the scope of the invention will become apparent to those skilled in the art from this detailed description.

### BRIEF DESCRIPTION OF THE DRAWINGS

The present invention will become more fully understood from the detailed description given hereinbelow and the accompanying drawings, which are given by illustration only, and thus are not limitative of the present invention, and wherein:

FIG. 1 is an overview showing a slide type mobile terminal in accordance with the related art;

FIG. 2 is an overview showing a bar type mobile terminal in accordance with the related art;

FIG. 3 is an overview of a mobile terminal.

FIG. 4 is an overview showing an operational state of the mobile terminal as shown in fig.3.

FIG. 5A is a sectional view of a keypad assembly included in the mobile terminal in accordance with one embodiment of the present invention;

FIG. 5B is an enlarged view of a portion 'A' of FIG. 5;

FIG. 6 is a top view of the keypad assembly in accordance with one embodiment of the present invention;

FIG. 7 is a side view of the keypad assembly in accordance with one embodiment of the present invention;

FIG. 8 is a side view showing a state that the keypad assembly has been drawn out in accordance with one embodiment of the present invention;

FIG. 9 is a sectional view showing another example of the keypad assembly in accordance with one embodiment of the present invention;

FIG. 10 is a sectional view of a mobile terminal in accordance with another embodiment of the present invention; and

FIG. 11 is a sectional view showing an operational state of the mobile terminal in accordance with one embodiment of the present invention.

### DETAILED DESCRIPTION OF THE INVENTION

Reference will now be made in detail to the preferred embodiments of the present invention, examples of which are illustrated in the accompanying drawings.

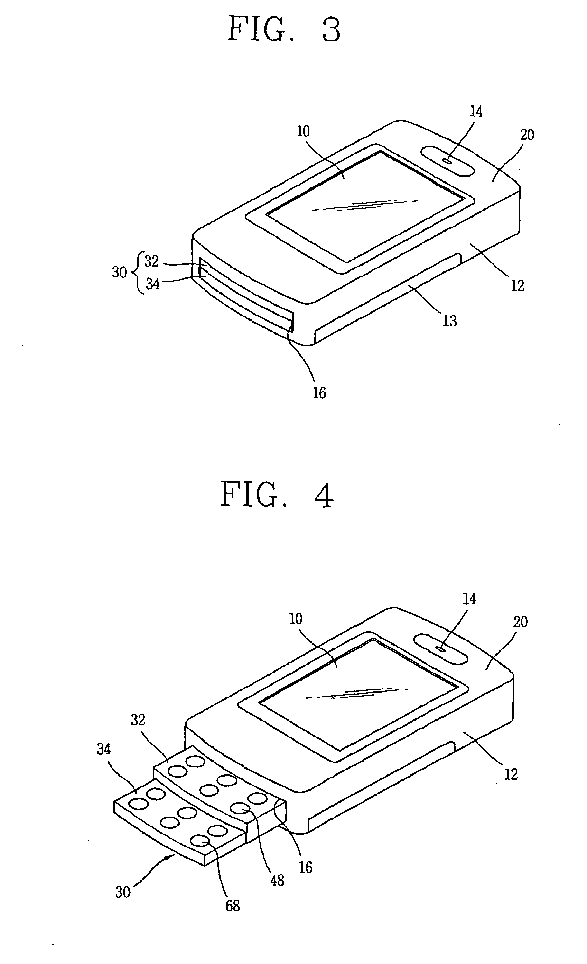

Turning first to FIG. 3, which is an overview of a mobile terminal As shown, the mobile terminal includes a terminal body 20 having a display 10 mounted on its front surface and a battery 12 mounted on its rear surface. The terminal also includes a stackable keypad assembly 30 slidably received in a receiving part 16 of the terminal body 20 such that the keypad assembly 30 can be drawn out the terminal body 20 when needed.

The keypad assembly 30 also includes a first keypad 32 and a second keypad 34. Further, a speaker 14 is mounted at an upper portion on the front surface of the terminal body 20. In addition, FIG. 1 illustrates the receiving part 16 being formed at a lower surface of the terminal body 20. However, the receiving part 16 can also be formed at the left, right or top sides of the terminal body 20.

Next, FIG. 4 is an overview showing an operational state of the mobile terminal As shown, the first and second keypads 32 and 34 can be drawn out of the receiving part 16 when needed. Note that FIG. 1 illustrates the first and second keypads 32 and 34 being secured within the receiving part 16.

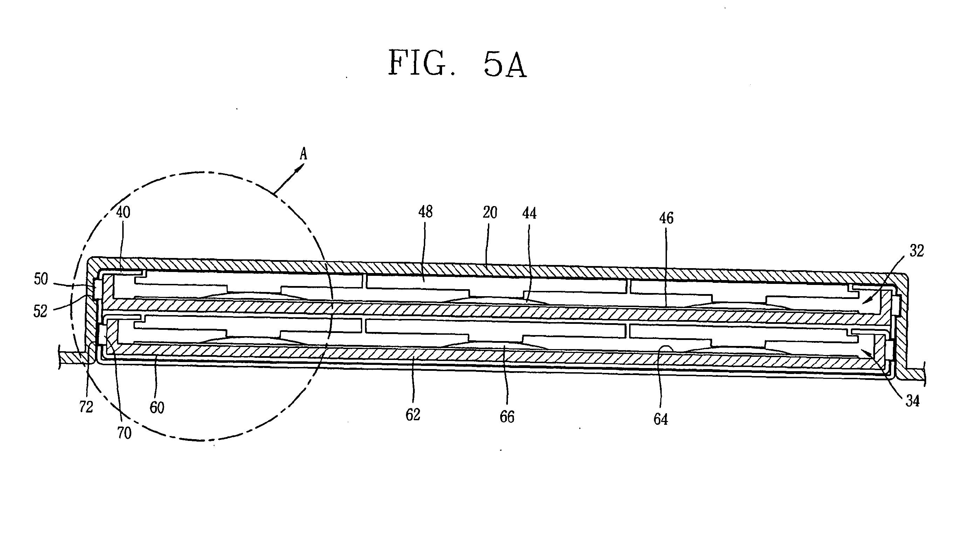

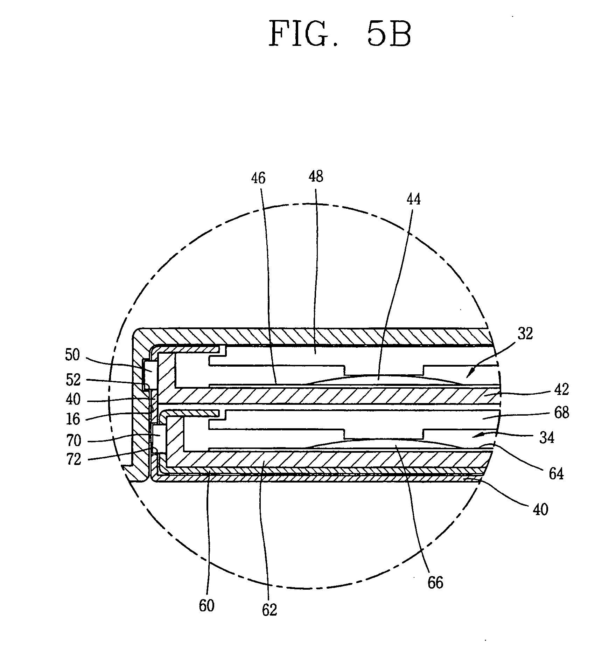

Turning next to FIG. 5A, which is a sectional view of the keypad assembly 30 shown in FIGs.3 and 4. See also FIG. 5B, which illustrates section "A" of FIG. 5A in more detail. As shown, the second keypad 34 is stacked below the first keypad 32 and slidably mounted with the first keypad 32. Further, the first keypad 32 includes a first frame 40 slidably mounted in the receiving part 16, a first board 42 fixed at the first frame 40, a first PCB 46 mounted at the first board 42 and having a plurality of dome switches 44, and first key buttons 48 disposed on an upper surface of the dome switches 44 and pressing against the dome switches 44.

In addition, the second keypad 34 is slidably received at the first frame 40, the first board 42 is fixed at an upper side of the first frame 40, and both upper ends of the first frame 40 are bent in an inward direction to secure the first key buttons 48. Also, first guide parts including a guide pin 50 and guide slot 52 for slidably guiding the first frame 40 are formed between a side of the first frame 40 and a side of the receiving part 16 of the terminal body 20.

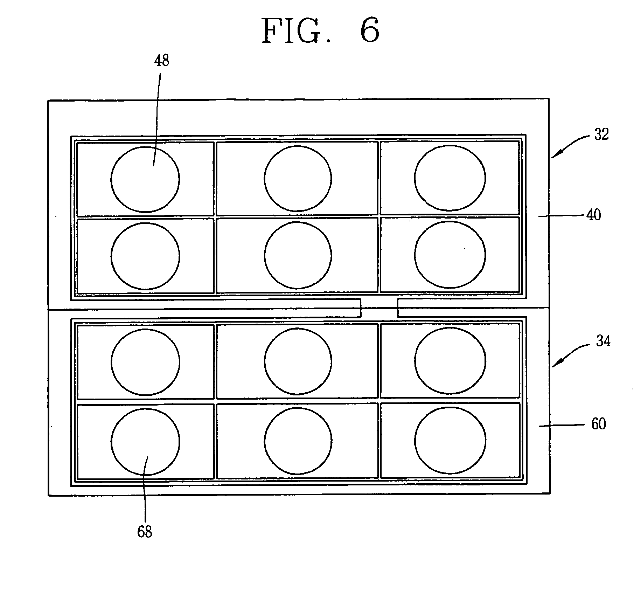

Further, the guide pin 50 is formed to protrude from both sides of the first frame 40, and the guide slot 52 is formed at an inner surface of both sides of the receiving part 16. Thus, the guide pin 50 is inserted and slidably moved in the guide slot 52. In addition, both end portions of the guide slot 52 are blocked to prevent the guide pin 50 from being slidably moved more than a certain distance. Moreover, both edges of the first board 42 extend upwardly and are fixed at both inner sides of the first frame 40, and the first PCB 46 is mounted on an upper surface thereof. As shown in FIG. 6, the key buttons 48 are formed in two lines and are positioned on the upper surface of the first PCB 46.

Further, the second keypad 34 includes a second frame 60 slidably mounted at the first frame 40, a second board 62 fixed at the second frame 60, a second PCB 64 mounted at the second board 62 and having a plurality of dome switches 66, and second key buttons 68 disposed on an upper surface of the dome switches 66 and pressing against the dome switches 66. The second frame 60 is slidably disposed inside the first frame 40 and both upper ends of the second frame 60 are bent in an inward direction to prevent the second key buttons 68 from being released.

Further, second guide parts including a guide pin 70 and guide slot 72 slidably guide a movement of the second frame 60 and are formed between the first and second frames 40 and 60. In addition, the guide slot 72 is formed at both sides of the first frame 40, and the guide pin 70 protrudes from both sides of the second frame 60 and is slidably moved along the guide slot 72. As shown, both edges of the second board 62 extend in an upward direction and are fixed at both inner sides of the second frame 60, and the second PCB 64 is mounted on an upper surface thereof. In addition, it is also possible not to include the first and second key buttons 48 and 68 in which the first and second dome switches 44 and 66 are directly pressed to input information. A touch screen input device may also be used.

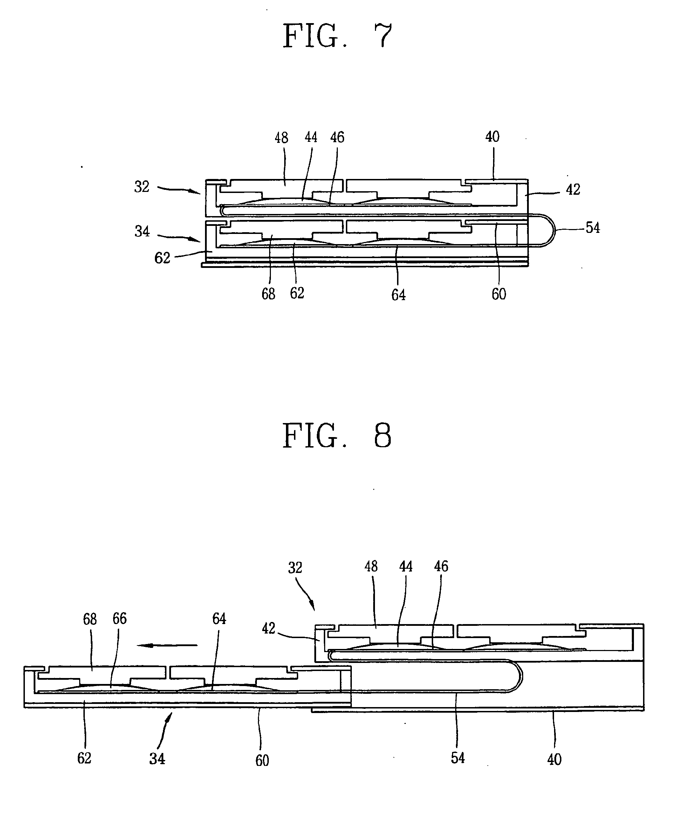

In addition, as shown in FIGS. 7 and 8, a flexible printed circuit (FPC) 54 connects the first PCB 46 and the second PCB 64. That is, one end of the FPC 54 is connected with a front side of the first PCB 46 and the other end is connected with a rear surface of the second PCB 64. Also, the FPC 54 is bent between the first and second keypads 32 and 34. Accordingly, when the second keypad 34 is slidably moved, the bent portion is gracefully moves along with the second keypad 34.

The above-described mobile terminal operates as follows. When a user draws the keypad assembly 30 out of the receiving part 16, the second keypad 34 is slidably drawn out first and then the first key pad 32 follows and is slidably drawn out of the receiving part 16. That is, the second keypad 34 is drawn out as the guide pin 70 of the second frame 60 is slid along the second guide slot 72 formed at the first frame 40, and the first keypad 32 is drawn out as the first guide pin 50 formed at the first frame 40 is slid along the guide slot 52 formed at the receiving part 16.

Accordingly, because the keypad assembly 30 with the first and second keypads 32 and 34 stacked therein is received at the side of the terminal body 20, the display 10 can be installed on the entire front surface or at least a larger front surface of the terminal body 20 than the related art. Thus, the size of the display 10 can be increased and the overall size of the terminal can be reduced.

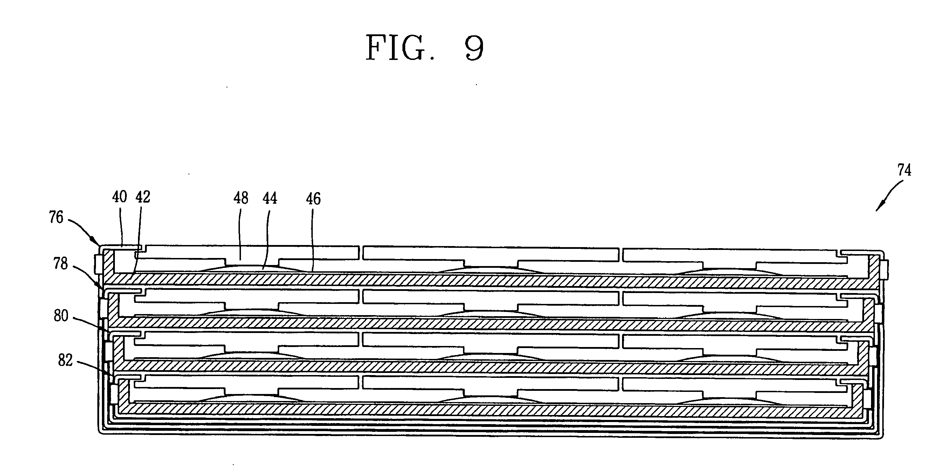

Next, FIG. 9 is a sectional view showing another example of a keypad assembly 74 in accordance with the present invention. In this example, the keypad assembly 74 has four keypads stacked together. Namely, the keypad assembly 74 includes a first keypad 76 disposed at an upper most side, a second keypad 78 slidably connected at a lower surface of the first keypad 76, a third keypad 80 slidably connected at a lower surface of the second keypad 78, and a fourth keypad 82 slidably connected at a lower surface of the third keypad 80. The keypads 76, 78, 80, 82 are stacked in a similar fashion as the keypads 32 and 34. Further, key buttons of the keypads 76, 78, 80 and 82 are arranged in a row. The keypad assembly 74 operates in a similar manner as the keypad assembly 30. It is also possible to provide any number of stacked key pads.

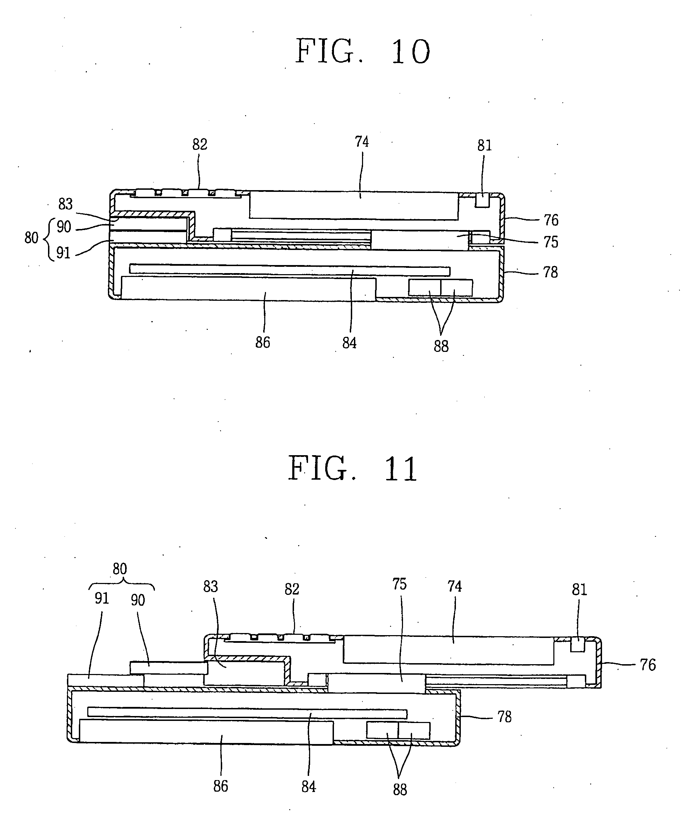

Turning next to FIG. 10, which is a sectional view of a mobile terminal in accordance with another embodiment of the present invention, and FIG. 11, which is an overview showing an operational state of this mobile terminal. As shown, the mobile terminal is a slide type mobile terminal including a first body 76 on which a display 74 is mounted, a second body 78 slidably connected with the first body 76, a slide module 75 mounted between the first body 76 and the second body 78 and slidably guiding the first body 76, and a keypad assembly 80 received in the first body 76. Similar to the other embodiments, the keypad assembly 80 includes stacked keypads 90 and 91 drawn out of the mobile terminal.

In addition, the first body 76 also includes a microphone 81 installed at its upper side, and a multi-keypad 82 installed at its lower side. A receiving part 83 receives the keypad assembly 80 and is formed at a lower side of the portion where the multi-keypad 82 is installed. In addition, because the multi-keypad 82 is thin, a space for accommodating the keypad assembly 80 can be sufficiently secured at its lower side thereof. Further, the receiving part 83 is formed such that the side and lower surface of the first body 76 are opened at the lower side of the multi-keypad 82, and has a space for receiving the keypad assembly 80.

In addition, the second body 78 is slidably moved by the first body 76. The terminal also includes a main PCB 84, and a battery 86 mounted on a rear surface thereof. A space part 88 accommodates another component (e.g., an antenna, ear jack, speaker, etc.) after the battery 86 is mounted. Further, the first keypad 90 is slidably received in the receiving part 83, and the second keypad 91 is slidably stacked on a lower surface of the first keypad 90 and fixed on an upper surface of the second body 78.

In addition, the first and second keypads 90 and 91 are similar to the first and second keypads 32 and 34 in the first embodiment of the present invention, so a detailed description thereof is not repeated. The mobile terminal in accordance with this other embodiment of the present invention operates as follows.

When the first body 76 is slidably moved relatively with respect to the second body 78, the first and second keypads 90 and 91 are drawn out and exposed on the upper surface of the second body 78. Namely, because the second keypad 91 is fixed on the upper surface of the second body 78, when the first body 76 is slidably moved, the second keypad 91 is slidably moved relatively with respect to the first keypad 90 so as to be exposed, and when the movement of the second keypad 91 is completed, the first keypad 90 is slidably moved out of the receiving part 83 and exposed. In addition, when the first body 76 is slidably moved to a closed position, the first keypad 90 is pushed into the receiving part 83 and then the second keypad 91 is pushed into the receiving part 83.

Further, the above description describes both of the first and second key pads being drawn out of the receiving part. However, it is also possible that the user only draw out the first key pad and not draw out the second keypad. The terminal may also be configured such that the second keypad is drawn out without drawing out the first keypad. Therefore, if the user only wants to use one of the keypads, he or she can merely draw out the desired key pad. That is, the first and second key pads may be independently drawn out.

As so far described, the mobile terminal in accordance with the present invention has the following advantages. That is, because the keypad assembly is received within the body of the terminal and can be protracted, the size of the terminal can be reduced. That is, the first and second keypads are slidably mounted with respect to each other such that when the first keypad is drawn out of the body, the first keypad engages with the second keypad to also draw out the second keypad. Thus, the limited space of the terminal is effectively utilized.

As the present invention may be embodied in several forms without departing from the essential characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalence of such metes and bounds are therefore intended to be embraced by the appended claims.

## Claims

1. A mobile terminal, comprising:
a first body (76);
a second body (78) slidably mounted on the first body (76); and
a key assembly (80) including at least first and second keypads (90, 91),
**characterized in that**
the first and second keypads (90, 91) are received in the first body (76) or between the first and second body (76 ,78) in a stacked state, wherein the at least first and second keypads are adapted to be placed in an unstacked state when the first body (76) is slidably opened from the second body (78), wherein the first and second key pads (90, 91) are exposed on an upper surface of the second body (78) when the first body (76) is slidably opened from the second body (78).

2. The mobile terminal of claim 1, wherein the first body (76) comprises:
a display (74) formed on its front surface; and
a receiving part (83) formed at its side into which the keypad assembly (80) is received in the stacked state.

3. The mobile terminal of claim 2, wherein the receiving part (83) is formed at a rear surface of a multi-key pad (82) mounted at a lower portion of the first body (76).

4. The mobile terminal of claim 1, wherein the second body (78) includes a main printed circuit board (84) mounted therein, a battery (86) mounted on its rear surface, and a component (88) mounted below the printed circuit board (84) in a space next to the battery (86).

5. The mobile terminal of claim 2, wherein the first keypad (90) is mounted to be slidably moved in the receiving part (83), and the second keypad (91) is disposed so as to be stacked on the first keypad (90), slidably connected with the first keypad (90), and fixed on an upper surface of the second body (78).

6. The mobile terminal of claim 2, wherein the first keypad (90) comprises:
a first frame (40) mounted to be slidably moved in the receiving part (83);
a first board (42) fixed at the first frame (40); and
a first printed circuit board (46) mounted at the first board (42) and having a plurality of first dome switches (44).

7. The mobile terminal of claim 6, wherein the first keypad (90) further comprises first key buttons (48) disposed on an upper surface of the dome switches (44) and configured to be pressed against the first dome switches (44).

8. The mobile terminal of claim 7, wherein the second keypad (91) is adapted to slidably move in the first frame (40), and both upper ends of the first frame (40) are formed to be bent inwardly to secure the first key buttons (48).

9. The mobile terminal of claim 6, further comprising:
a first guide portion (50, 52) for guiding the first frame (40) to be slidably movable formed between the first frame (40) and the receiving part (83),
wherein the first guide portion comprises a guide pin (50) protruding from both sides of the first frame (40) and a guide slot (52) formed at both inner sides of the receiving part (83) to allow the guide pin (50) to be inserted and slidably moved therealong.

10. The mobile terminal of claim 9, wherein the second keypad (91) comprises:
a second frame (60) slidably mounted at the first frame (40);
a second board (62) fixed at the second frame (60); and
a second printed circuit board (64) mounted at the second board (62) and having a plurality of second dome switches (66).

11. The mobile terminal of claim 10, wherein the second keypad (91) comprises second key buttons (68) disposed on an upper surface of the second dome switches (66) and configured to be pressed against the second dome switches (66).

12. The mobile terminal of claim 11, wherein the second frame (60) is adapted to slidably move inside the first frame (40) and both upper ends thereof are bent inwardly to secure the second key buttons (68)

13. The mobile terminal of claim 10, further comprising:
a second guide portion (70, 72) formed between the first and second frames (40, 60) and configured to slidably guide the second frame (60); and
a flexible printed circuit (54) connecting the first and second printed circuit boards (46, 64) and being disposed in a folded state between the first and second keypads (90, 91),
wherein the second guide portion comprises a guide slot (72) formed at side of the first frame (40) and a guide pin (70) protruded from side of the second frame (60) and slidably moved along the guide slot (72).

## Patentansprüche

1. Mobiles Endgerät, das umfasst:
einen ersten Körper (76);
einen zweiten Körper (78), der an dem ersten Körper (76) gleitend angebracht ist; und
eine Tastenanordnung (80), die wenigstens ein erstes und ein zweites Tastenfeld (90, 91) umfasst,
**dadurch gekennzeichnet, dass**
das erste und das zweite Tastenfeld (90, 91) in dem ersten Körper (76) oder zwischen dem ersten und dem zweiten Körper (76, 78) in einem übereinander liegenden Zustand aufgenommen sind, wobei das wenigstens erste und das wenigstens zweite Tastenfeld dazu ausgelegt sind, in einen nicht übereinander liegenden Zustand gebracht zu werden, wenn der erste Körper (76) in Bezug auf den zweiten Körper (78) durch Gleiten geöffnet wird.

2. Mobiles Endgerät nach Anspruch 1, wobei der erste Körper (76) umfasst:
eine Anzeige (74), die an seiner vorderen Oberfläche ausgebildet ist; und
einen Aufnahmeteil (83), der an seiner Seite ausgebildet ist, in der die Tastenfeldanordnung (80) im übereinander liegenden Zustand aufgenommen ist.

3. Mobiles Endgerät nach Anspruch 2, wobei der Aufnahmeteil (83) an einer hinteren Oberfläche eines Mehrtastenfeldes (82), das in einem unteren Abschnitt des ersten Körpers (76) angebracht ist, ausgebildet ist.

4. Mobiles Endgerät nach Anspruch 1, wobei der zweite Körper (78) eine gedruckte Hauptleiterplatte (84), die darin montiert ist, eine Batterie (86), die an seiner hinteren Oberfläche angebracht ist, und eine Komponente (88), die unter der gedruckten Leiterplatte (84) in einem an die Batterie (86) angrenzenden Raum montiert ist, umfasst.

5. Mobiles Endgerät nach Anspruch 2, wobei das erste Tastenfeld (90) in dem Aufnahmeteil (83) gleitend beweglich angebracht ist und das zweite Tastenfeld (91) so angeordnet ist, dass es über dem ersten Tastenfeld (90) liegt, mit dem ersten Tastenfeld (90) gleitend verbunden ist und an einer oberen Oberfläche des zweiten Körpers (78) befestigt ist.

6. Mobiles Endgerät nach Anspruch 2, wobei das erste Tastenfeld (90) umfasst:
einen ersten Rahmen (40), der in dem Aufnahmeteil (83) gleitend beweglich angebracht ist;
eine erste Platte (42), die an dem ersten Rahmen (40) befestigt ist; und
eine erste gedruckte Leiterplatte (46), die an der ersten Platte (42) angebracht ist und mehrere erste gewölbte Schalter (44) besitzt.

7. Mobiles Endgerät nach Anspruch 6, wobei das erste Tastenfeld (90) ferner erste Tastenknöpfe (48) umfasst, die an einer oberen Oberfläche der gewölbten Schalter (44) angeordnet sind und konfiguriert sind, um gegen die ersten gewölbten Schalter (44) gedrückt zu werden.

8. Mobiles Endgerät nach Anspruch 7, wobei das zweite Tastenfeld (91) dazu ausgelegt ist, sich im ersten Rahmen (40) gleitend zu bewegen, wobei beide oberen Enden des ersten Rahmens (40) so geformt sind, dass sie einwärts gebogen sind, um die ersten Tastenknöpfe (48) zu befestigen.

9. Mobiles Endgerät nach Anspruch 6, das ferner umfasst:
einen ersten Führungsabschnitt (50, 52), der zwischen dem ersten Rahmen (40) und dem Aufnahmeteil (83) ausgebildet ist, um den ersten Rahmen (40) so zu führen, dass er gleitend beweglich ist,
wobei der erste Führungsabschnitt einen Führungsstift (50), der von beiden Seiten des ersten Rahmens (40) vorsteht, und einen Führungsschlitz (52), der an beiden Innenseiten des Aufnahmeteils (83) ausgebildet ist und ermöglicht, dass der Führungsstift (50) eingesetzt und darin gleitend bewegt wird, umfasst.

10. Mobiles Endgerät nach Anspruch 9, wobei das zweite Tastenfeld (91) umfasst:
einen zweiten Rahmen (60), der an dem ersten Rahmen (40) gleitend angebracht ist;
eine zweite Platte (62), die an dem zweiten Rahmen (60) befestigt ist; und
eine zweite gedruckte Leiterplatte (64), die an der zweiten Platte (62) angebracht ist und mehrere zweite gewölbte Schalter (66) besitzt.

11. Mobiles Endgerät nach Anspruch 10, wobei das zweite Tastenfeld (91) zweite Tastenknöpfe (68) umfasst, die an einer oberen Oberfläche der zweiten gewölbten Schalter (66) angeordnet sind und konfiguriert sind, um gegen die zweiten gewölbten Schalter (66) gedrückt zu werden.

12. Mobiles Endgerät nach Anspruch 11, wobei der zweite Rahmen (60) dazu ausgelegt ist, sich in dem ersten Rahmen (40) gleitend zu bewegen, wobei beide obere Enden hiervon nach innen gebogen sind, um die zweiten Tastenknöpfe (68) zu befestigen.

13. Mobiles Endgerät nach Anspruch 10, das ferner umfasst:
einen zweiten Führungsabschnitt (70, 72), der zwischen dem ersten und dem zweiten Rahmen (40, 60) ausgebildet ist und konfiguriert ist, um den zweiten Rahmen (60) gleitend zu führen; und
eine flexible gedruckte Schaltung (54), die die erste und die zweite gedruckte Leiterplatte (46, 64) miteinander verbindet und in einem gefalteten Zustand zwischen dem ersten und dem zweiten Tastenfeld (90, 91) angeordnet ist,
wobei der zweite Führungsabschnitt einen Führungsschlitz (72), der an einer Seite des ersten Rahmens (40) ausgebildet ist, und einen Führungsstift (70), der von der Seite des zweiten Rahmens (60) vorsteht und längs des Führungsschlitzes (72) gleitend beweglich ist, umfasst.

## Revendications

1. Terminal mobile comprenant :
un premier corps (76) ;
un second corps (78) monté de façon coulissante sur le premier corps (76) ; et
un ensemble de touches (80) comprenant au moins des premier et second claviers (90, 91),
**caractérisé en ce que**
les premier et second claviers (90, 91) sont reçus dans le premier corps (76) ou entre les premier et second corps (76, 78) dans un état empilé, dans lequel les au moins premier et second claviers sont agencés pour être placés dans un état non empilé lorsque le premier corps (76) est ouvert de façon coulissante à partir du second corps (78), dans lequel les premier et second claviers (90, 91) sont exposés sur une surface supérieure du second corps (78) lorsque le premier corps (76) est ouvert de façon coulissante à partir du second corps (78).

2. Terminal mobile selon la revendication 1, dans lequel le premier corps (76) comprend :
un écran (74) formé sur sa surface avant ; et
une partie de réception (83) formée au niveau de son côté, dans laquelle l'ensemble de touches (80) est reçu dans l'état empilé.

3. Terminal mobile selon la revendication 2, dans lequel la partie de réception (83) est formée au niveau d'une surface arrière d'un clavier à touches multiples (82) monté au niveau d'une partie inférieure du premier corps (76).

4. Terminal mobile selon la revendication 1, dans lequel le second corps (78) comprend une carte de circuit imprimé principale (84) montée dans celui-ci, une batterie (86) montée sur sa surface arrière, et un composant (88) monté au-dessous de la carte de circuit imprimé (84) dans un espace proche de la batterie (86).

5. Terminal mobile selon la revendication 2, dans lequel le premier clavier (90) est monté pour être déplacé de façon coulissante dans la partie de réception (83), et le second clavier (91) est disposé de façon à être empilé sur le premier clavier (90), connecté de façon coulissante au premier clavier (90), et fixé sur une surface supérieure du second corps (78).

6. Terminal mobile selon la revendication 2, dans lequel le premier clavier (90) comprend :
un premier cadre (40) monté pour être déplacé de façon coulissante dans la partie de réception (83) ;
une première carte (42) fixée au niveau du premier cadre (40) ; et
une première carte de circuit imprimé (46) montée au niveau de la première carte (42) et ayant une pluralité de premiers interrupteurs en dôme (44).

7. Terminal mobile selon la revendication 6, dans lequel le premier clavier (90) comprend en outre des premières touches (48) disposées sur une surface supérieure des interrupteurs en dôme (44) et configurées pour être pressées contre les premiers interrupteurs en dôme (44).

8. Terminal mobile selon la revendication 7, dans lequel le second clavier (91) est adapté pour se déplacer de façon coulissante dans le premier cadre (40), et les deux extrémités supérieures du premier cadre (40) sont formées pour être pliées vers l'intérieur pour fixer les premières touches (48).

9. Terminal mobile selon la revendication 6, comprenant en outre :
une première partie de guidage (50, 52) pour guider le premier cadre (40) pour pouvoir se déplacer de façon coulissante, formée entre le premier cadre (40) et la partie de réception (83),
dans lequel la première partie de guidage comprend une tige de guidage (50) faisant saillie à partir des deux côtés du premier cadre (40) et une rainure de guidage (52) formée au niveau des deux côtés internes de la partie de réception (83) pour permettre à la tige de guidage (50) d'être insérée et déplacée de façon coulissante tout le long.

10. Terminal mobile selon la revendication 9, dans lequel le second clavier (91) comprend :
un second cadre (60) monté de façon coulissante au niveau du premier cadre (40) ;
une seconde carte (82) fixée au niveau du second cadre (60) ; et
une seconde carte de circuit imprimé (64) montée au niveau de la seconde carte (62) et ayant une pluralité de seconds interrupteurs en dôme (66).

11. Terminal mobile selon la revendication 10, dans lequel le second clavier (91) comprend des secondes touches (68) disposées sur une surface supérieure des seconds interrupteurs en dôme (66) et configurées pour être pressées contre les seconds interrupteurs en dôme (66).

12. Terminal mobile selon la revendication 11, dans lequel le second cadre (60) est adapté pour se déplacer de façon coulissante à l'intérieur du premier cadre (40) et les deux extrémités supérieures de celui-ci sont pliées vers l'intérieur pour sécuriser les secondes touches (68).

13. Terminal mobile selon la revendication 10 comprenant en outre :
une seconde partie de guidage (70, 72) formée entre les premier et second cadres (40, 60) et configurée pour guider de façon coulissante le second cadre (60) ; et
un circuit imprimé flexible (54) connectant les première et seconde cartes de circuit imprimé (46, 64) et étant disposé dans un état plié entre les premier et second claviers (90, 91),
dans lequel la seconde partie de guidage comprend une rainure de guidage (72) formée au niveau du côté du premier cadre (40) et une tige de guidage (70) faisant saillie à partir du côté du second cadre (60) et déplacée de façon coulissante le long de la rainure de guidage (72).
